# EUROPÄISCHE PATENTSCHRIFT

(11) **EP 2 166 051 B1**
(45) Veröffentlichungstag und Bekanntmachung des Hinweises auf die Patenterteilung: **24.08.2016**
(21) Anmeldenummer: 09170593.9
(22) Anmeldetag: 17.09.2009
(51) Int. Cl.: C09J 4/00, C08K 3/32

(54) **REPULPIERBARE KLEBMASSEN**
REPULPABLE ADHESIVE
MASSES COLLANTES POUVANT ÊTRE REFONDUES

(30) Priorität: 18.09.2008 DE 102008047966
(43) Veröffentlichungstag der Anmeldung: 24.03.2010
(73) Patentinhaber: tesa SE, 22848 Norderstedt (DE)
(72) Erfinder: Ellringmann, Dr. Kai, 22589 Hamburg (DE); Wulf, Dr. Stefan, 22869 Schenefeld (DE); Kerber, Kristin, 22529 Hamburg (DE)

(56) Entgegenhaltungen:
- EP-A2- 1 935 956
- US-A- 4 569 960

## Beschreibung

Die Erfindung betrifft repulpierbare Klebmassen insbesondere für die Verklebung auf füllstoffhaltigen Materialien.

Eine etablierte Methode zur Anbietung von repulpierbaren Klebmassen besteht in der Herstellung von (Meth-)Acrylsäurepolymeren oder Acrylatcopolymeren umfassend Acrylsäure und zumindest ein Acrylat- und/oder Methacrylatcomonomer, wie beispielsweise Alkylacrylat, Alkylmethacrylat, 2-Ethoxalyloxyethylmethacrylate, 2-Ethoxyethylacrylat, Hexaethylmethacrylat, Ethylhexylacrylat, Butylacrylat, Isooctylacrylat oder dergleichen. gegebenenfalls kann das Polymer auch noch andere, radikalisch copolymerisierbare Comonomere wie Vinylcaprolactam, Vinylacetat oder dergleichen enthalten.

Dieses Basispolymer kann und wird typischerweise mit Harzen und/oder Weichmachern abgemischt, um die klebtechnischen Eigenschaften der resultierenden (Haft-)Klebmasse maßgeschneidert einstellen zu können. Die zugesetzten Komponenten sind idealerweise wasserlöslich oder -dispergierbar, sie können sowohl niedermolekularer als auch hochmolekularer Natur sein.

Das rheologische Profil der Klebmasse wird durch gezielte Vernetzung des Basispolymeren eingestellt. Hiebei kommen sowohl kovalent (Isocyanate, Epoxide, Hydrazine, Amine) als auch ionisch wirkende [Aluminium-(III), Titan-(IV), Cer-(IV)] Vernetzungsreagenzien zum Einsatz.

Derart hergestellte repulpierbare (Haft-)Klebmassen, die ihre Hauptanwendung in Produkten für die papiererzeugende und -weiterverarbeitende Industrie haben, zeigen in Kontakt mit füllstoffhaltigen Papieren jedoch häufig einen deutlichen Einbruch ihrer klebtechnischen Eigenschaften, der bis hin zum vollständigen Verlust von Klebkraft und Anfassklebrigkeit (Tack) gehen kann.

Füllstoffhaltige Substrate, insbesondere Papiere können durch Alterungsprozesse oder äußere Einflüsse mehrwertige Metallionen abgeben. Insbesondere ergibt sich durch die häufig im Papier oder in Substanzen, mit denen das Papier behandelt wurde, vorhandenen Calciumionen ein Problem, da Calcium ein in der Papierindustrie üblicher und zunehmend eingesetzter Füllstoff und Bestandteil in Strichmitteln ist.

Der Eigenschaftsverlust der (Haft-)Klebmasse lässt sich insbesondere auf eine Migration der Metallionen in die Klebmasse zurückführen. Die gezielt vernetzten carboxylhaltigen und/oder säurehaltigen Copolymere können auf diesem Weg über das gewünschte Maß hinaus unkontrolliert nachvernetzen. Diese Nachvernetzung führt zu einer nachteiligen Beeinflussung des rheologischen Profils derart, dass eine massive Erhöhung der Kohäsion und damit einhergehend eine Reduktion der Anfassklebrigkeit verursacht wird, ungünstigstenfalls bis hin zum vollständigen Verlust von Klebkraft und Tack.

Insbesondere für die Anwendung in der papierverarbeitenden Industrie, beispielsweise im Zusammenhang mit dem fliegenden Rollenwechsel, stellt sich an die einzusetzenden Klebebänder daher ein strenges Anforderungsprofil (Einsatz als sogenanntes Spleißband, in der Literatur z.T. auch als "Splicing-Tape" bezeichnet). Bei der Verarbeitung von Flachbahnmaterial, insbesondere von Papier, ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig Haftklebebänder zum Einsatz, um das Ende der alten Bahn mit dem Anfang der neuen Bahn zu verbinden. So müssen diese Klebebänder - über die gesamte Anwendungsdauer hinweg - einen hohen Tack, eine gute Kohäsion sowie gute Repulpierbarkeit [Einbringbarkeit in die Pulpe, also den in Wasser gelösten beziehungsweise aufgeschwemmten Papier- oder Faserbrei, bei der Wiederaufbereitung von (Alt-)Papier; nicht zwingend gleichbedeutend mit "Wasserlöslichkeit"] aufweisen.

Die EP 1 935 956 A2 offenbart Klebemassen, denen zum Abfangen von Metallionen, insbesondere Calciumionen, beispielsweise Chelatbildner, Ionenaustauschersubstanzen, Molsiebe und/oder Fällungsmittel zugesetzt sind. Unter anderem werden der Klebemasse Phosphate oder Polyphosphate zugesetzt. Diese Additive haben aber den Nachteil, dass sie die Anfassklebrigkeit im Vergleich zu den nicht additivierten Basisklebemassen verringern, die Klebemasse also weniger "klebrig" ist. Dieser Effekt ist insbesondere bei den frisch additivierten Massen (sogenannten "Frischmustern") festzustellen.

Als Anfassklebrigkeit (auch als "Tack" bezeichnet) versteht man die Eigenschaft einer (Haft-)Klebmasse, eine sofortige Haftung an vielen Werkstoffen zu bewirken, wobei die Anfassklebrigkeit insbesondere auch eine Funktion des einwirkenden Druckes ist. Quantitativ lässt sich die Anfassklebrigkeit beispielsweise mit dem sogenannten "Rolling-Ball-Tack" (siehe weiter hinten, Experimenteller Teil, Messmethoden, Test C) beschreiben. Haftklebemassen besitzen einen permanenten Tack.

Aufgabe der Erfindung ist es, eine Klebmasse anzubieten, die eine noch weiter erhöhte zeitliche Stabilität hinsichtlich ihrer klebtechnischen Eigenschaften bei Verklebungen auf füllstoffhaltigen Materialien aufweist, insbesondere in Hinblick auf die Anfassklebrigkeit, als dies durch die in der EP 1 935 956 A2 offenbarten Klebemassen gegeben ist. Gelöst werden konnte die Aufgabe überraschend durch den Zusatz von Orthophosphorsäure als Additiv zu der Klebemassen, insbesondere Haftklebemassen. Insbesondere die Langzeiteignung repulpierbarer (Haft-)Klebemassen für Klebebänder, bei denen die (Haft-)Klebemasse in Kontakt zu metallionenhaltigen, insbesondere calcium(II)ionenhaltigen Materialien, wie beispielsweise entsprechenden Papierträgern, steht, konnte hierdurch deutlich verbessert werden.

Dementsprechend betrifft der Hauptanspruch eine repulpierbare Klebemasse, gemäß Ansprüchen 1 bis 4, enthaltend Orthophosphorsäure. Weiterhin betrifft die Erfindung ein repulpierbares Klebeband, gemäß Anspruch 5, welches mit zumindest einer Schicht einer Klebemasse ausgerüstet ist, der Orthophosphorsäure zugesetzt ist.

Sofern im folgenden lediglich von "Phosphorsäure" die Rede ist, ist damit Orthophosphorsäure [H₃PO₄ oder, anders dargestellt, (HO)₃P(O)] gemeint.

Die Phosphorsäure wird zu dem Zweck zugesetzt, Metallionen, insbesondere Erdalkalimetallionen, ganz besonders Calcium(II)ionen und/oder Magnesium(II)ionen zu binden und somit abzufangen.

Insbesondere für die Anwendung der Klebmasse für die Verklebung auf Papieren, die üblicherweise einen mehr oder weniger hohen Gehalt an Calcium (II)-Ionen aufweisen, ist Orthophosphorsäure von Vorteil, die geeignet ist, eben diese Ca²⁺-Ionen zu "deaktivieren".

Zusätzlich zu der Phosphorsäure können der (Haft-)Klebemasse weitere Additive zugesetzt sein, insbesondere solche, wie sie in der EP 1 935 956 A2 als metallionenbindende Additive offenbart sind. Es kann weiterhin sehr vorteilhaft sein, zusätzlich zu der Phosphorsäure auch Mischungen zweier oder mehrerer Additive oder Mischungen eines oder mehrerer Additive mit weiteren Substanzen einzusetzen.

Die Phosphorsäure wird der Klebmasse in einer Menge von 2 bis zu 10 Gew.-%, bezogen auf den reinen Phosphorsäuregehalt in der (Haft-)Klebemasse, zugesetzt. Die Phosphorsäure kann als Feststoff, als wässrige Lösung oder als Lösung in organischen Lösungsmitteln (wie beispielsweise Aceton) oder auch als Lösung in einer Mischung aus Wasser und organischen Lösemitteln zugegeben werden. Gegebenenfalls vorhandene Lösemittel lassen sich hervorragend durch einen Trocknungsprozess der Klebemasse entfernen, wie dieses bei der Verarbeitung von Klebemassen ohnehin häufig geschieht.

Als Klebmassen w erden insbesondere vinylcarbonsäurehaltige, besonders acrylsäurehaltige und/oder methacrylsäurehaltige, (Haft-)Klebmassen eingesetzt (die Vinylcarbonsäuren liegen in der Haftklebmasse insbesondere als einpolymerisierte Comonomere vor; können aber auch - insbesondere als Comonomerreste - in freier Form vorliegen). Der Vinylcarbonsäureanteil (insbesondere Acrylsäureanteil) in der Haftklebmasse kann insbesondere mehr als 30 Gew.-%, sogar mehr als 50 Gew-% betragen. Selbst für Klebemassen, deren Vinylcarbonsäureanteil (insbesondere Acrylsäureanteil) bei mehr als 70 und auch 80 Gew.-% lag, hat sich die erfindungsgemäße Additivierung als sehr vorteilhaft herausgestellt.

Repulpierbarkeit im Sinne dieser Schrift bedeutet, dass das repulpierbare Produkt (Klebemasse oder Klebeband) nach der Messmethode TAPPI UM 213 (TAPPI Useful Methods 213, TAPPI 1991, ISBN 0898522064) als repulpierbar gilt.

Bei der erfindungsgemäßen Klebemasse handelt es sich um eine solche, welche nach der genannten Messmethode TAPPI UM 213 repulpierbar ist, wenn sie in Form eines Prüfmusters vermessen wird, dessen Klebmassenauftrag nach der Trocknung 40 g/m² beträgt und das wie folgt hergestellt wird:
- Herstellung einer 30 %igen Lösung der zu vermessenden (Haft-)Klebemasse in einem 1:1:1 Gemisch aus Wasser, Isopropanol und Aceton
- Beschichtung der Lösung auf silikonisiertes Trennpapier
- Konditionierung für 120 Minuten bei Raumtemperatur
- Trocknung der derart hergestellten Lappenmuster für 20 Minuten bei 100 °C
- Kaschierung dieser Muster mit einem Papierträger (Firma Drewsen SPEZIALPAPIERE GmbH & Co. KG; Handelsname des Papiers: "PRODURA Basispapier mit hoher Spaltfestigkeit")
- Vorbereitung der Messung: Konditionierung der Muster für jeweils 3 Tage bei 23 °C und 50 % relativer Luftfeuchtigkeit.

Danach wurde mit den derart vorbereiteten Mustern die Untersuchung nach TAPPI UM 213 vorgenommen.

Die erfindungsgemäßen Klebebänder können sowohl ein- als auch beidseitig klebend ausgestaltet sein.

Bei den erfindungsgemäßen Klebebändern handelt es sich um solche, welche nach der oben genannten Meßmethode TAPPI UM 213 repulpierbar sind.

Gegenstand der Erfindung ist weiterhin die Verwendung gemäß der Ansprüche 6 bis 9 der wie vorstehend beschriebenen Klebebänder für die Verklebung von füllstoffhaltigen Materialien, insbesondere von Calcium-(II)- und/oder Magnesium-(II)-ionenhaltigen Materialien. Hier sei insbesondere die Verwendung der erfindungsgemäßen (Haft-)Klebebänder für die Verklebung von Ca²⁺- und/oder Mg²⁺-haltigen Papieren und/oder von Papieren, die die vorgenannten Ionen im Vorstrich (Primer) aufweisen, herausgestellt.

Die erfindungsgemäßen (Haft-)Klebebänder können hervorragend in der Papierindustrie im Rahmen einer Permanentverklebung eingesetzt werden. Eine weitere Verwendungsmöglichkeit liegt im Bereich des statischen oder fliegenden Rollenwechsels eingesetzt werden, um ablaufende und neue Papierbahnen miteinander zu verbinden, besonders günstig auch in den Fällen, in denen die im Rahmen dieser Schrift dargestellten Probleme mit Erdalkalimetallionen, insbesondere mit Calcium-(II)-Ionen, auftreten. Bei solchen Klebebändern wird häufig ein spaltbares Papier als Trägermaterial eingesetzt, welches während des Rollenwechsels die Klebeverbindung durch Spalten des Papieres löst.

Insbesondere vorteilhaft lässt sich das erfindungsgemäße Klebeband somit als Spleißband gemäß Anspruch 7 einsetzen.

Dementsprechend kann das erfindungsgemäße Klebeband insbesondere in Form eines Klebebandes ausgeführt sein, wie sie etwa in den Schriften DE 196 28 317 A, DE 198 30 674 A, DE 199 02 179 A, DE 199 58 223 A, DE 100 58 956, DE 101 23 981, WO 03/20623 A, WO 03/24850 A, DE 102 10 192 A, DE 102 58 667, DE 10 2004 028 312 A, DE 10 2005 051 181 A dargestellt sind, um nur einige Beispiele für erfindungsgemäß vorteilhafte Ausführungsformen zu nennen. Insbesondere vorteilhaft lässt sich die mit Phosphorsäure additivierte Klebemasse für die Schichten einsetzen, die mit einem Papierträger, insbesondere mit dem Spaltpapierträger in Kontakt stehen.

Überraschender Weise hat sich gezeigt, dass durch die Additivierung die Klebeeigenschaften der Klebmassen, insbesondere der Haftklebmassen, nicht nur nicht verschlechtert wurde, sondern die Langzeiteigenschaften, verglichen mit den phosphathaltigen Klebemassen der EP 1 935 956 A2, sogar signifikant verbessert werden konnte. Der Fachmann hätte hingegen erwartet, dass das Abfangen der aus dem zu verklebenden Material in die Klebmasse einwandernden Metallionen (beispielsweise der aus einem Papier einwandernden Ca²⁺-Ionen) in der grenzflächenseitigen Schicht der Klebmasse geschehen würde und die Klebmasse durch die sich an der Grenzfläche ansammelnden abgefangenen Ionen, beispielsweise in Form der gebildeten schwerlöslichen Verbindungen, quasi klebtechnisch "deaktiviert" werden würde. Dies konnte wider Erwarten jedoch nicht festgestellt werden.

Mit der erfindungsgemäßen Klebmasse ist es gelungen, repulpierbare Klebebänder herzustellen, mit dem sich Papiere, die im Deckstrich als anorganischen Bestandteil Calciumcarbonat enthalten, noch besser verkleben lassen als durch die in der EP 1 935 956 A2 dargestellten Klebebändern, insbesondere auch als die Klebebänder, die dort mit Phosphaten bzw. phosphorhaltigen Verbindungen additiviert sind. Dies gilt selbst dann, wenn Calciumcarbonat der ausschließliche anorganische Bestandteil ist oder im Deckstrich zu sehr hohen Anteilen vorliegt. Die Verklebung eines solchen Papiers bleibt über noch längere Zeiträume stabil. Es konnte festgestellt werden, dass die Additivierung der Klebmassen das ursprüngliche Eigenschaftsprofil über einen längeren Anwendungszeitraum hinweg auf hohem Niveau stabilisiert. Ein deutlicher Vorteil der Phosphorsäure-additivierten Massen ergibt sich daraus, dass die Haftklebeeigenschaften, insbesondere die Anfassklebrigkeit, ausgedrückt durch die Rolling-Ball-Tack-Messung, unmittelbar nach der Additivierung auf demselben oder annähernd demselben Niveau bleiben wie die nicht additivierten Massen. Die mit Phosphaten additivierten Massen, wie sie aus der EP 1 935 956 A2 bekannt sind, zeigten durch die Additivierung hingegen eine deutliche Beeinflussung der Haftklebeeigenschaften. Zudem konnte festgestellt werden, die Haftklebeeigenschaften noch stabiler blieben als bei den in der EP 1 935 956 A2 offenbarten Klebemassen. Bezüglich der nicht phosphorhaltigen Additive offenbart die EP 1 935 956 A2 keine Werte, so dass hier ein direkter Vergleich erschwert ist. Es ist zu erwarten, dass auch gegenüber diesen Massen eine Verbesserung der klebtechnischen (Langzeit-)Eigenschaften eintritt. Zumindest aber stellen die mit Orthophosphorsäure additivierten Klebemassen der vorliegenden Schrift eine wirksame - und einfach zu realisierende - Alternative dar, die sich aus dieser Schrift nicht nahe liegend ableiten ließ. Denn bezüglich aller phosphorhaltig additivierten Klebemassen zeigen die vorliegenden, mit Orthophosphorsäure addiivierten Klebemassen ein verbessertes Verhalten, wie vorstehend bereits ausgeführt wurde.

Die erfindungsgemäße Haftklebemasse und die erfindungsgemäßen Haftklebebänder sind insbesondere für Anwendungsgebiete geeignet, bei denen es darauf ankommt, dass der Tack über einen langen Zeitraum hin konstant oder annähernd konstant bleibt. Dies ist insbesondere im Bereich der Permanentverklebung von Papier relevant. Hier verbleibt das Klebeband lange auf dem Substrat und zeigt ohne Umsetzung der vorliegenden Erfindung die eingangs beschriebenen negativen Effekte, insbesondere aufgrund der Einwirkung von störenden Metallionen, wie beispielweise Ca²⁺-Ionen.

### Experimenteller Teil

In Laborversuchen konnte gezeigt werden, dass die Additivierung von an sich bekannten Haftklebemassen, insbesondere hoch acrylsäurehaltigen Haftklebemassen (das heißt mit einem hohen Anteil an Acrylsäure in der Comonomerzusammensetzung zur Polymerisierung der Klebemasse; hier untersucht an Haftklebemassen mit Acrylsäureanteilen von 50 Gew-% und mehr) in einem Bereich bis zu 10 Gew-% Orthophosphorsäure keinen signifikanten Einfluss auf die Klebkräfte hatte, experimentell nachgewiesen durch die Klebkräfte auf Stahl und auf einem Etikettenpapier. Die Anfassklebrigkeit nimmt erst im oberen Additivierungsbereich des oben genannten Mischbereichs ab. Als optimal hat sich eine Additivierung in einer Menge von 2 bis 5 Gew.-% herausgestellt, insbesondere im Bereich von 3 ± 1 Gew.-%. Der elastische Anteil (in %) bei der Messung des Mikroscherweges, welcher ein Maß für die Netzwerkdichte darstellt, blieb auf einem guten Wert. Dieser Test dient der Prüfung der Scherfestigkeit von Klebebändern unter einer Temperaturbelastung von 40°C.

Bei Langzeitmessungen von nicht additivierten und mit einem Gewichtsanteil von 3 % mit Orthophosphorsäure abgemischten Klebemassen wurde der Effekt der Alterungsstabilisierung untersucht. Dazu wurden jeweils Proben der genannten Klebemassen auf Papiere aufgetragen, die im Strich Calciumcarbonatanteile von 5, 10, 15, 50 und 100 Gew.-% aufwiesen. Je höher der Anteil an Calciumionen, desto schneller verlief die Alterung der Klebmassen in Hinblick auf deren klebtechnische Eigenschaften (Anfassklebrigkeit, Klebkräfte auf Stahl und Etikettenpapier, Mikroscherwegbestimmung, Scherstandzeiten). Nach der Additivierung mit 3 Gew.-% Orthophosphorsäure wurde das Alterungsverhalten bei hoch calciumhaltigen Papieren deutlich verbessert. Bei den Messungen mit Calciumanteilen von 5 und 10 Gew.-% im Papierstrich konnte über eine Messdauer von 40 Tagen sogar festgestellt werden, dass die Klebkräfte sich nicht signifikant verschlechterten.

Durch die Ergebnisse der Langzeitmessungen hat sich somit gezeigt, dass durch die erfindungsgemäße Additivierung eine deutliche Verbesserung der Lagerstabilität der Haftklebemasse in Kontakt mit (erdalkali-)metallionenhaltigen, insbesondere calciumionenhaltigen, Materialien festzustellen ist, wobei die Klebkraft und die Anfassklebrigkeit auch über einen längeren Zeitraum hinweg auf einem guten Niveau verbleibt.

### Beispiele:

### Beispiel 1: Referenzmasse 1

Es wurden 599 g einer 30 %igen Lösung eines radikalisch polymerisierten Gerüstpolymers bestehend aus 47 % Acrylsäure, 48 % Butylacrylat und 5% Vinylcaprolactam in einem 1:1:1 Gemisch aus Wasser, Isopropanol und Aceton mit 397 g Polyoxyethylen(15)kokosamin (Handelsname Ethomeen C-25, Firma Akzo; CAS-Nr. 61791-14-8) und 0,70 g des Bisglycidylethers von Bisphenol A (Bisphenol-A-Epichlorhydrin Mg < 700; Handelsname Epikote 828 LVEL, Firma Hexion, CAS-Nr. 25068-38-6) abgemischt.

Das Gerüstpolymer ist ferner durch eine massenmittlere Molmasse Mg von 9•10⁵ g/mol und eine Polydispersität von 8 gekennzeichnet.

### 2: (Basispolymer aus Beispiel 1 mit Additiv)

Die in Beispiel 1 beschriebene Masse wird zusätzlich mit 17,3 g Diammoniumhydrogenphosphat abgemischt.

### Beispiel 3: (Basispolymer aus Beispiel 1 mit Additiv)

Die in Beispiel 1 beschriebene Masse wird zusätzlich mit 17,3 g einer kommerziell erhältlichen Zubereitung aus Natriumpolyphosphat und Alkylphosphonat mit hoher Komplexierwirkung (Handelsname Kappafos D11, Hersteller Kapp-Chemie, Calciumbindevermögen von 120 mg CaO/g It. Hersteller) abgemischt.

### Beispiel 4: erfindungsgemäße Masse 1 (Basispolymer aus Beispiel 1 mit Additiv)

Die in Beispiel 1 beschriebene Masse wird zusätzlich mit 17,3 g Orthophosphorsäure abgemischt.

### Beispiel 5: Referenzmasse 2

### 5.1 Herstellung eines hydrophilen Gerüstpolymers

In eine 2 I fassende vakuumdichte Polymerisations-Stahlapparatur mit Rückflusskühler, Ankerrührer, Heizmantel und Dosiervorrichtungen werden 315 g Acrylsäure, 112,5 g 2-Ethylhexylacrylat, 250 g Aceton, 100 g Ethanol und 100 g Wasser eingewogen. Nach Evakuieren, Spülen mit N₂ und Aufheizen auf 62 °C wird unter Rühren eine Lösung von 0,6 g 2,2-Azo-bis-(2-methyl-butyronitril) in 6,4 g Aceton in das bei 600 hPa siedende Reaktionsmedium gegeben. Die Polymerisation setzt unter langsam absinkender Siedetemperatur und Anstieg der Viskosität ein. Nach einer Reaktionszeit von 30 min. werden bei 58 °C erneut 0,5 g 2,2-Azo-bis-(2-methylbutyronitril), gelöst in einem Gemisch von 75 g Aceton, 50 g Ethanol und 50 g Wasser, zugeführt und der Druck auf 700 hPa angehoben. Nach weiteren 60 min. und erneutem Viskositätsanstieg werden bei 60 °C weitere 75 g Aceton, 50 g Ethanol und 50 g Wasser zugegeben und der Druck auf 800 hPa erhöht. Eine erneute Verdünnung wird nach 120 min. bei 63 °C und ca. 1000 hPa (Normaldruck) mit 75 g Aceton, 50 g Ethanol und 50 g Wasser vorgenommen. Die Polymerisation wird bei diesen Bedingungen unter Sieden der Lösung 60 min. fortgesetzt. Danach werden bei 62 °C (Normaldruck) gleichzeitig je eine Lösung von 22,5 g SPA in 127,5 g entsalztem Wasser und eine Lösung von 1,5 g Bis-(4-tert.-butylcyclohexyl)-peroxidicarbonat in 13,5 g Aceton kontinuierlich verteilt über einen Zeitraum von 120 min. in die siedende Polymerlösung eindosiert. Danach wird die Reaktion bei 62 °C Reaktionstemperatur zu Ende geführt und nach einer Gesamtreaktionszeit von 20 h auf RT abgekühlt. Während der gesamten Zeit werden mittels Durchsaugen eines schwachen N₂-Stroms evtl. vorhandene O₂-Mengen aus dem Reaktionsgemisch entfernt. Die erhaltene Polymerlösung ist wasserklar. Der Polymergehalt beträgt 32,42 Gew.-%. Die rel.Visc. gemessen in absol. Methanol bei 25 °C beträgt 3,363.

### 5.2 Herstellung einer repulpierbaren Haftklebemasse.

92,54 g (30 g Polymer) der entsprechend 5.1 hergestellten Polymerlösung werden mit 67,25 g eines ethoxilierten flüssigen primären Kokosfettamins gemischt. Die Wasserstoffatome der Aminogruppe sind bei dieser weichmachenden Verbindung vollständig durch Ethoxiketten substituiert. Die Gesamtzahl der Ethoxieinheiten beträgt pro Aminofunktion durchschnittlich 15 (Handelsname Ethomeen C 25 Firma Akzo). In die Mischung wird unter Rühren 0,05 g des Bisglycidylethers von Bisphenol A (Handelsname Epikote 828 LVEL, Firma Hexion), gelöst in 117 g Aceton, in der Mischung gleichmäßig verteilt und durch Einrühren von 39 g Wasser eine klare streichfähige Haftkleberlösung erhalten.

### Beispiel 6: (Basispolymer aus Beispiel 5 mit Additiv)

Die in Beispiel 5.2 beschriebene Masse wird zusätzlich mit 2,92 g Diammoniumhydrogenphosphat abgemischt.

### Beispiel 7: (Basispolymer aus Beispiel 5 mit Additiv)

Die in Beispiel 5.2 beschriebene Masse wird zusätzlich mit 2,92 g Kappafos D11 abgemischt.

### Beispiel 8: erfindungsgemäße Masse 2 (Basispolymer aus Beispiel 5 mit Additiv)

Die in Beispiel 5.2 beschriebene Masse wird zusätzlich mit 17,3 g Orthophosphorsäure abgemischt.

### Beispiel 9: Referenzmasse 3

### 9.1 Herstellung eines hydrophilen Gerüstpolymers

In eine 2 I fassende, vakuumdichte Polymerisationsapparatur entsprechend Beispiel 1 werden 225 g Acrylsäure, 202,5 g 2-Ethylhexylacrylat, 400 g Aceton und 50 g Ethanol eingewogen. Nach Evakuieren, Spülen mit Stickstoff und Aufheizen auf 62 °C wird unter Rühren eine Lösung von 0,5 g 2,2-Azo-bis-(2-methyl-butyronitril) in 8 g Aceton in das bei 650 hPa siedende Reaktionsmedium gegeben. Die Polymerisation beginnt unter langsam absinkender Siedetemperatur und ansteigender Viskosität des Reaktionsgemisches. Nach einer Reaktionszeit von 50 min. werden bei 58 °C erneut 0,5 g 2,2-Azo-bis-(2-methyl-butyronitril) gelöst in 150,0 g Aceton und 25,0 g Ethanol zugegeben. Die Polymerisation wird unter Sieden des Reaktionsgemisches bei 60 °C und 800 hPa fortgesetzt. Nach weiteren 100 min. Reaktionszeit werden 150,0 g Aceton und 25 g Ethanol als Verdünnungsmittel zugegeben und der Druck auf Normaldruck eingestellt. Die Polymerisation wird unter Sieden bei 59 °C - 60 °C weitere 180 min. fortgesetzt. Danach werden bei 60 °C gleichzeitig je eine Lösung von 22,5 g SPA in 127,5 g entsalztem Wasser und eine feinteilige Dispersion von 4 g Bis-(4-tert.-butylcyclohexyl)-peroxidicarbonat in 6 g Wasser in einem Zeitraum von 120 min. in das siedende Reaktionsgemisch dosiert. Die Reaktion wird bei 61 °C mit einer Gesamtreaktionszeit von 20 h zu Ende geführt. Entsprechend Beispiel 1 wird während der Polymerisation für eine inerte Atmosphäre im Reaktionsraum gesorgt. Nach dem Abkühlen wird die Polymerlösung mit 175 g entsalztem Wasser und 50 g Ethanol verdünnt.

Der Polymergehalt beträgt 30,07 Gew.-%, die rel. Visc. gemessen in Methanol/Wasser 4,00 : 1,20 bei 25 °C beträgt 2,500.

### 9.2 Herstellung einer Haftklebemasse

94,8 g (28,5 g Polymer) der entsprechend 9.1 hergestellten Polymerlösung werden mit 60,4 g des im Beispiel 5 unter 5.2 beschriebenen wasserlöslichen Weichmachers gemischt. Hierzu wird eine Lösung von 8,0 g eines Klebharzes (unverestertes Kolophoniumharz mit Säurezahl im Bereich von 170) in 66,7 g Aceton gemischt. Vor dem Ausstreichen wird eine Lösung von 0,094 g des Bisglycidylethers von Bisphenol A (Handelsname Epikote 828 LVEL, Firma Hexion) in 10 g Aceton gleichmäßig in der Mischung verteilt.

### Beispiel 10: (Basispolymer aus Beispiel 9 mit Additiv)

Die in Beispiel 9.2 beschriebene Masse wird zusätzlich mit 0,855 g Diammoniumhydrogen-phosphat abgemischt.

### Beispiel 11: (Basispolymer aus Beispiel 9 mit Additiv)

Die in Beispiel 9.2 beschriebene Masse wird zusätzlich mit 0,855 g Kappafos D11 abgemischt.

### Beispiel 12: erfindungsgemäße Masse 3 (Basispolymer aus Beispiel 9 mit Additiv)

Die in Beispiel 9.2 beschriebene Masse wird zusätzlich mit 17,3 g Orthophosphorsäure abgemischt.

### Messungen

Die in den Beispielen 1 - 12 hergestellten Haftklebemassen wurden als 30 %ige Lösung in einem 1:1:1 Gemisch aus Wasser, Isopropanol und Aceton auf silikonisiertem Trennpapier beschichtet. Nach 120 minütiger Konditionierung bei Raumtemperatur wurden die Lappenmuster für 20 Minuten bei 100 °C getrocknet. Der Masseauftrag betrug nach der Trocknung 40 g/m². Diese Muster wurden mit Calciumcarbonat enthaltenden Papier kaschiert. Für die Untersuchungen wurde ein Papier der Firma Drewsen SPEZIALPAPIERE GmbH & Co. KG mit dem Handelsnamen "PRODURA Basispapier mit hoher Spaltfestigkeit" verwendet. Die klebtechnische Untersuchung erfolgte jeweils sowohl an frischen Mustern ("Sofort-Messung"), als auch an Mustern die in einem Klimaschrank bei 40 °C und 80 % relativer Luftfeuchtigkeit gelagert wurden (4-Wochen-Messung). Vor den Untersuchungen wurden die Muster jeweils 3 Tage lang bei 23 °C und 50 % relativer Luftfeuchtigkeit konditioniert.

### Klebkraft-Test (Test A)

Die Bestimmung der Klebkraft wurde wie folgt durchgeführt:

Als definierter Haftgrund wurde ein einseitig haftklebrig ausgerüstetes Etikettenpapier mit der haftklebrigen Seite auf eine Stahlplatte montiert. Als zu untersuchende Probe wurde ein 20 mm breiter Streifen der oben beschriebenen Muster unter Belastung (2 kg) auf den Haftgrund aufgedrückt. Unmittelbar im Anschluss daran wurde das Klebeband in einem Winkel von 180 ° vom Haftgrund mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen.

### Mikroscherweg-Test (Test B)

Dieser Test dient der Prüfung der Scherfestigkeit von Klebebändern unter einer Temperaturbelastung von 40 °C.

### Messprobenpräparation:

Als zu untersuchende Probe wurde ein Streifen der oben beschriebenen Muster auf eine polierte, temperierbare, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug Höhe x Breite = 13 mm x 10 mm, die Probe wurde senkrecht aufgehängt, überragte am oberen Rand die Stahl-Prüfplatte um 2 mm und wurde bündig mit einem stabilen Klebestreifen verstärkt, der als Auflage für den Wegmessfühler diente.

### Messung:

Die zu messende Probe wurde am unteren Ende mit einem Gewicht von 100 g belastet. Die Stahl-Prüfplatte mit der verklebten Probe wurde auf 40 °C temperiert. Gemessen wurde die Deformation der Probe mittels Wegmessfühler über einen Zeitraum von 15 Minuten. Die Prüfung erfolgte bei einer Raumtemperatur von 23 ± 3 °C und einer relativen Luftfeuchtigkeit von 50 ± 5 %.

### Rolling-Ball-Tack (Test C)

Die Messung des Rolling-Ball-Tacks erfolgte nach der Methode PSTC-6 (Test Methods for Pressure Sensitive Adhesive Tapes, 15th Edition; Herausgeber: Pressure Sensitive Tape Council, Northbrook (Illinois), USA), wobei die folgenden Abwandlungen vorgenommen wurden:
- Verwendung von Edelstahl-Kugellagerkugeln (Edelstahl 1.4401), Durchmesser 7/16 Zoll, Masse 5,7 g
- Vorbereitung der Kugeln: Gründliche Reinigung mit Zellstoff und Aceton; die sauberen Kugeln werden vor der Messreihe für 15 min in einem Acetonbad gelagert (Kugeln sind vom Aceton vollständig umgeben); mindestens 30 min vor Beginn der Messung werden die Kugeln dem Acetonbad entnommen und zum Trocknen und Konditionieren offen im Prüfklima gelagert
- Jede Kugel wird nur für eine Messung verwendet.

### Repulpierbarkeit (Test D)

Die Bestimmung erfolgte an den wie vorstehend beschrieben hergestellten Mustern nach TAPPI UM 213 (TAPPI Useful Methods 213, TAPPI 1991, ISBN 0898522064).

### Ergebnisse

### Repulpierbarkeit

Für alle Beispiele 1 bis 12 konnte mit eigens hierfür wie vorstehend beschrieben hergestellten Mustern festgestellt werden, dass sie nach der Meßmethode TAPPI UM 213 repulpierbar sind und auch nach vierwöchiger Lagerung bleiben.

### Klebkräfte, Scherfestigkeit

In Tabelle 1 sind die klebtechnischen Eigenschaften dargestellt.

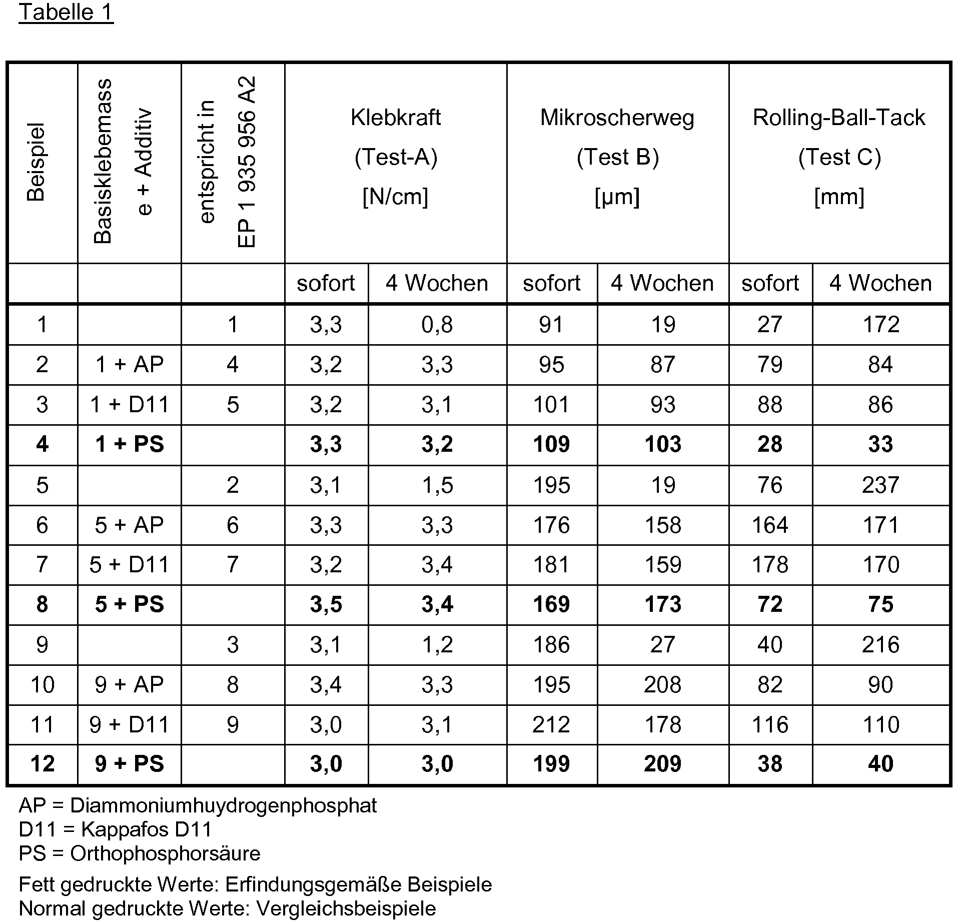

Es kann gezeigt werden, dass die Additivierung der Klebmassen mit Phosphorsäure bezüglich des Klebkraftverlustes mit der Zeit und bezüglich des Kohäsionsverhaltens (Mikroscherwegmessung) eine gleich gute Stabilisierungswirkung besitzt wie die Additivierung der gleichen Massen mit den Additven, wie sie in der EP 1 935 956 A2 offenbart sind. Bezüglich der Anfassklebrigkeit (des Tacks), dargestellt durch die Werte der Rolling-Ball-Tack-Messung, kann im Gegensatz zu den Vergleichsbeispielen festgestellt werden, dass durch die Additivierung mit Phosphorsäure keine Verschlechterung des Anfangswertes eintritt, wenn man mit den nicht additivierten Basismassen vergleicht und der Wert in der Langzeitmessung konstant bleibt.

Dieses Ergebnis wurde vollkommen überraschend gefunden und ließ sich aus der Kenntnis des Verhaltens der Klebemassen, wie sie aus der EP 1 935 956 A2 bekannt waren, nicht ableiten oder auch nur vermuten.

## Patentansprüche

1. Haftklebemasse, die gemäß TAPPI Useful Methods 213 (1991) repulpierbar ist, enthaltend 2 bis 10 Gew.-% Orthophosphorsäure, bezogen auf den reinen Phosphorsäuregehalt in der Haftklebemasse.

2. Klebmasse nach Anspruch 1, **dadurch gekennzeichnet, dass**
der Anteil an Orthoposphorsäure im Bereich von 2 bis 5 Gew.-% liegt, bezogen auf den reinen Phosphorsäuregehalt in der Haftklebemasse.

3. Klebemasse nach einem der vorangehenden Ansprüche, **dadurch gekennzeichnet, dass** die Klebemasse einen Acrylsäureanteil von mehr als 30 Gew.-% aufweist.

4. Klebemasse nach Anspruch 3, **dadurch gekennzeichnet, dass**
die Klebemasse einen Acrylsäureanteil von mehr als 50 Gew.% aufweist.

5. Klebeband mit repulpierbaren Eigenschaften, umfassend zumindest eine Schicht einer Klebemasse nach einem der vorangehenden Ansprüche.

6. Verwendung von Orthophosphorsäure in einer Menge von 2 bis 10 Gew.-% in gemäß TAPPI Useful Methods 213 (1991) repulpierbaren Haftklebemassen, bezogen auf den reinen Phosphorsäuregehalt in der Haftklebemasse, zur Verringerung der Veränderung der klebtechnischen Eigenschaften mit der Zeit.

7. Verwendung von Orthoposphorsäure nach Anspruch 6 zur Verringerung der Abnahme des Tacks mit der Zeit.

8. Verwendung eines Klebebandes nach Anspruch 5 für die Verklebung von füllstoffhaltigen Materialien.

9. Verwendung eines Klebebandes nach Anspruch 5 für die Verklebung von Calcium (II) und/oder Magnesium (II) ionenhaltigen Materialien.

10. Verwendung eines Klebebandes nach Anspruch 5 als Spleißband.

## Claims

1. Pressure-sensitive adhesive repulpable according to TAPPI Useful Methods 213 (1991), containing 2 to 10 wt% of orthophosphoric acid, based on the pure phosphoric acid content in the pressure-sensitive adhesive.

2. Adhesive according to Claim 1, **characterized in that** the fraction of orthophosphoric acid is in the range from 2 to 5 wt%, based on the pure phosphoric acid content in the pressure-sensitive adhesive.

3. Adhesive according to either of the preceding claims, **characterized in that** the adhesive has an acrylic acid fraction of more than 30 wt%.

4. Adhesive according to Claim 3, **characterized in that** the adhesive has an acrylic acid fraction of more than 50 wt%.

5. Adhesive tape having repulpable properties, comprising at least one layer of an adhesive according to any of the preceding claims.

6. Use of orthophosphoric acid in an amount of 2 to 10 wt% in pressure-sensitive adhesives repulpable according to TAPPI Useful Methods 213 (1991), based on the pure phosphoric acid content in the pressure-sensitive adhesive, to reduce the change in the technical adhesive properties over time.

7. Use of orthophosphoric acid according to Claim 6 to reduce the decrease in the tack over time.

8. Use of an adhesive tape according to Claim 5 for bonding filler-containing materials.

9. Use of an adhesive tape according to Claim 5 for bonding materials containing calcium(II) and/or magnesium(II) ions.

10. Use of an adhesive tape according to Claim 5 as splicing tape.

## Revendications

1. Masse autoadhésive, qui est repulpable selon TAPPI Useful Methods 213 (1991), contenant 2 à 10 % en poids d'acide orthophosphorique, par rapport à la teneur en acide phosphorique pur dans la masse autoadhésive.

2. Masse adhésive selon la revendication 1, **caractérisée en ce que** la proportion d'acide orthophosphorique se situe dans la plage allant de 2 à 5 % en poids, par rapport à la teneur en acide phosphorique pur dans la masse autoadhésive.

3. Masse adhésive selon l'une quelconque des revendications précédentes, **caractérisée en ce que** la masse adhésive présente une proportion d'acide acrylique de plus de 30 % en poids.

4. Masse adhésive selon la revendication 3, **caractérisée en ce que** la masse adhésive présente une proportion d'acide acrylique de plus de 50 % en poids.

5. Bande adhésive à propriétés repulpables, comprenant au moins une couche d'une masse adhésive selon l'une quelconque des revendications précédentes.

6. Utilisation d'acide orthophosphorique en une quantité de 2 à 10 % en poids dans des masses autoadhésives repulpables selon TAPPI Useful Methods 213 (1991), par rapport à la teneur en acide phosphorique pur dans la masse autoadhésive, pour réduire la modification des propriétés relatives à l'adhésion avec le temps.

7. Utilisation d'acide orthophosphorique selon la revendication 6 pour réduire le déclin de l'adhérence avec le temps.

8. Utilisation d'une bande adhésive selon la revendication 5 pour le collage de matériaux contenant des charges.

9. Utilisation d'une bande adhésive selon la revendication 5 pour le collage de matériaux contenant des ions calcium (II) et/ou magnésium (II).

10. Utilisation d'une bande adhésive selon la revendication 5 en tant que bande fibrillée.
